Europäisches Patentamt

European Patent Office

Office européen des brevets

(19)

(11) Publication number: **0 122 760**
**B1**

# EUROPEAN PATENT SPECIFICATION

(12)

(45) Date of publication of patent specification: **29.06.88**

(51) Int. Cl.⁴: **B 62 B 7/08**

(21) Application number: **84302394.6**

(22) Date of filing: **06.04.84**

(54) Baby carriage.

(30) Priority: **08.04.83 JP 52838/83 u**

(43) Date of publication of application:
**24.10.84 Bulletin 84/43**

(45) Publication of the grant of the patent:
**29.06.88 Bulletin 88/26**

(84) Designated Contracting States:
**DE FR GB IT**

(56) References cited:
**EP-A-0 027 374**
**BE-A- 830 672**
**DE-A-2 827 580**
**DE-C- 862 713**
**FR-A-2 283 039**
**GB-A-1 341 670**

(73) Proprietor: **APRICA KASSAI KABUSHIKIKAISHA**
**16-1 Higashishimizu-machi, Minami-ku**
**Osaka-shi Osaka-fu (JP)**

(72) Inventor: **Kassai, Kenzou**
**16-1 Higashishimizu-machi**
**Minami-ku Osaka-shi Osaka-fu (JP)**

(74) Representative: **Wright, Peter David John et al**
**R.G.C. Jenkins & Co. 26 Caxton Street**
**London SW1H 0RJ (GB)**

Courier Press, Leamington Spa, England.

## Description

This invention relates to baby carriages having first and second push rods and a handle extending between the push rods.

There have been proposed various types of folding actions for collapsing such baby carriages.

Typically the push rods are constructed so that they are maintained in predetermined spaced relation to each other when the baby carriage is opened in its position of use and when the latter is closed their spacing is narrowed. The handle is foldable in at least one place in its middle region, the folding operation allowing the change of the spacing of the push rods in the opened and closed states of the baby carriage. In order to firmly hold the opened state of the baby carriage, it is only necessary to prevent the handle from folding in this opened state. That is, it is only necessary that the arrangement be such that in the opened state of the baby carriage, locking is applied to resist any action in the direction to fold the handle.

EP-A-0 027 374 discloses a baby carriage having first and second push rods, and a handle extending between the push rods, the handle having first and second ends rotatably connected to the upper ends of the first and second push rods respectively by the insertion of one such part into the other such part and the engagement of a pin on one such part in an elongate slot in the other such part, first and second resiliently loaded locking means engagable with the pins being provided for respectively locking the first handle end against rotation relative to the first push rod upper end and the second handle end against rotation relative to the second push rod upper end in a position of use, the said resilient loading tending to maintain the locking means in locking engagement with the pins when they are in such engagement and the handle ends and push rod upper ends are in their position of use. Thus, by locking the handle ends against relative rotation to the push rod ends the locking means act to maintain the baby carriage in its opened state.

In the above-mentioned baby carriage disclosed in EP-A-0 027 374 the locking means have to be manually actuated into locking engagement with the pins after handle ends and push rod ends have been rotated relative to each other to their position of use when the carriage is moved from its closed state to its opened state.

The present invention provides a baby carriage in which the locking means are automatically brought into locking engagement with the pins on such relative rotation of the handle ends and push rod ends to their position of use.

This is achieved in accordance with the present invention by providing a baby carriage having first and second push rods, and a handle extending between the push rods, the handle having first and second ends rotatably connected to the upper ends of the first and second push rods respectively by the insertion of one such part into the other such part and the engagement of a pin on one such part in an elongate slot in the other such part, first and second resiliently loaded locking means engagable with the pins being provided for respectively locking the first handle end against rotation relative to the first push rod upper end and the second handle end against rotation relative to the second push rod upper end in a position of use, the said resilient loading tending to maintain the locking means in locking engagement with the pins when they are in such engagement and the handle ends and push rod upper ends are in their position of use, in which each locking means comprises a locking sleeve mounted on the connection of the handle and push rod ends, said sleeve being non-rotatable relative to said push rod end but being movable axially relative thereto with the resilient loading biasing the sleeve for movement in one axial direction, said sleeve having a passage receiving the pin and comprising a first elongate guide portion extending obliquely in said one axial direction to a locking portion which extends oppositely to said one axial direction such that as the handle ends and push rod ends are rotated relative to one another into said position of use, each pin passes along the guide portion of a respective sleeve to the locking portion thereof whereupon the resilient loading biases the sleeve in said one axial direction to locate the pin in locking portion of the passage.

Preferably the baby carriage further comprises respective anchoring means for temporarily anchoring each locking sleeve against movement in said one axial direction on movement of said sleeve in the opposite axial direction against the bias of said resilient loading to bring the pin to the end of the locking portion of the passage to which the guide portion thereof extends. The provision of such anchoring means facilitates movement of the baby carriage from its opened state to its folded state, since when the locking sleeves are so anchored by the anchoring means, the handle ends are rotatable relative to the push rod ends. During this relative rotation the pins move along the first elongate guide portions of the passages in the sleeves causing the sleeves to move in said one direction initially to release the anchoring means.

The anchoring means for each locking sleeve may, for example, comprise a projection and a recess for receiving said projection, one each of said projection and recess being provided respectively on said locking sleeve and push rod end.

In a preferred arrangement, the locking sleeve is formed with a pair of slits extending in said axial direction and said anchoring means therefor is positioned in a region between said slits.

The non-rotatable relative mounting of the sleeves to the push rod ends may be achieved by making the contours of the outer peripheral surface of each push rod end and of the inner peripheral surface of each locking sleeve are similar to each other and noncircular.

In a preferred embodiment of the invention described hereinafter, the first and second ends of the handle are inserted in the upper ends of the first and second push rods; the pins are provided on the handle ends and extend outwardly thereof through said elongated slots provided in the push rod upper ends; and the resilient loading for the locking sleeves is provided by respective springs interposed between the locking sleeves and push rod ends, said springs biasing the locking sleeves downwardly relative to the handle ends.

In order that the invention may be well understood, the above-mentioned preferred embodiment thereof, which is given by way of example only, will now be described in more detail with reference to the accompanying drawings, in which:

Fig. 1 is a perspective view showing the opened state of a baby carriage according to an embodiment of this invention;

Fig. 2 is a perspective view showing the closed state of the baby carriage of Fig. 1;

Figs. 3 through 5 are exploded views of the components of a connecting section C shown in Figs. 1 and 2, of which Fig. 3 shows one end portion 4 of a push rod-connecting rod 2, Fig. 4 shows the upper end of a push rod 1, and Fig. 5 shows a locking sleeve 10;

Fig. 6 shows the opened and locked state of the baby carriage with the components shown in Figs 3 through 5 being put together, the view taken from the back of the baby carriage;

Fig. 7 is a sectional view taken along the line A—A of Fig. 6; and

Figs. 8 through 10 respectively show the portions shown in Fig. 6 of which Fig. 8, like Fig. 6, shows the opened and locked state of the baby carriage, the view taken from inside the baby carriage, Fig. 9 shows the opened and unlocked state of the baby carriage, the view taken from the back of the baby carriage, and Fig. 10 shows the closed state of the baby carriage as seen from its back.

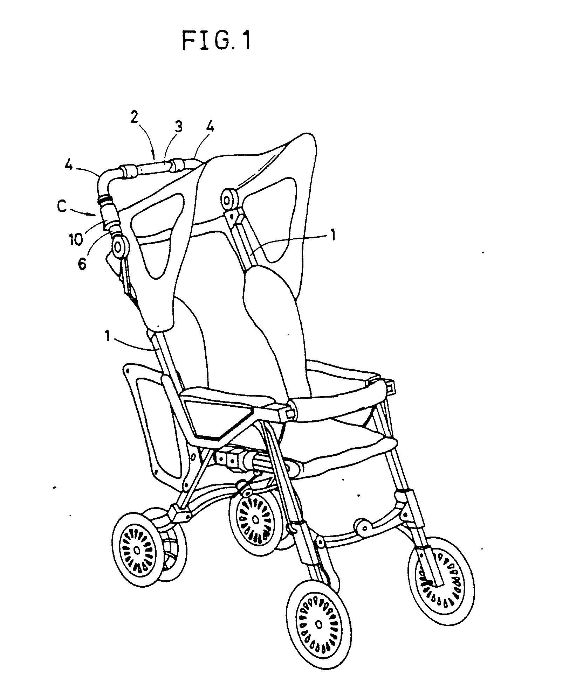

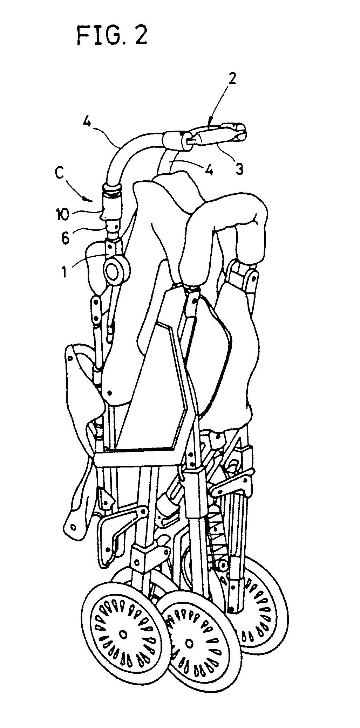

The basic construction of the baby carriage shown in Figures 1 and 2 is disclosed in US-A-4,317,581 and EP-A-0,027,045

These figures show a typical example of a baby carriage to which this invention is directed. That is; it has a pair of push rods 1, between which a push rod connecting rod, or handle, 2 is connected. In the opened state of the baby carriage, as shown in Fig. 1, the push rods 1 are held at a predetermined distance therebetween, and when the baby carriage assumes the closed state, as shown in Fig. 2, their distance is narrowed. The push rod-connecting rod 2 is foldable in at least one place in the middle. In this embodiment, the push rod-connecting rod 2 has a middle portion 3 and two end portions 4 connected to the opposite ends of the middle portion 3, and said middle portion 3 and end portions 4 are connected together by pins, making it possible to change the linear state of Fig. 1 to the folded state of Fig. 2. A change in the distance between the push rods in the opened and closed states is allowed by such folding of the push rod connecting rod 2.

In Figs. 1 and 2, the portion shown at C is the connecting section between the push rod 1 and the push rod-connecting rod 2.

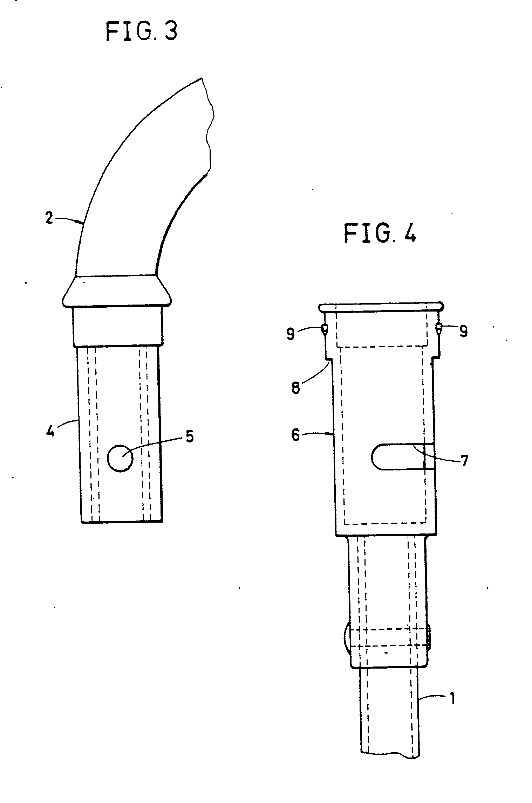

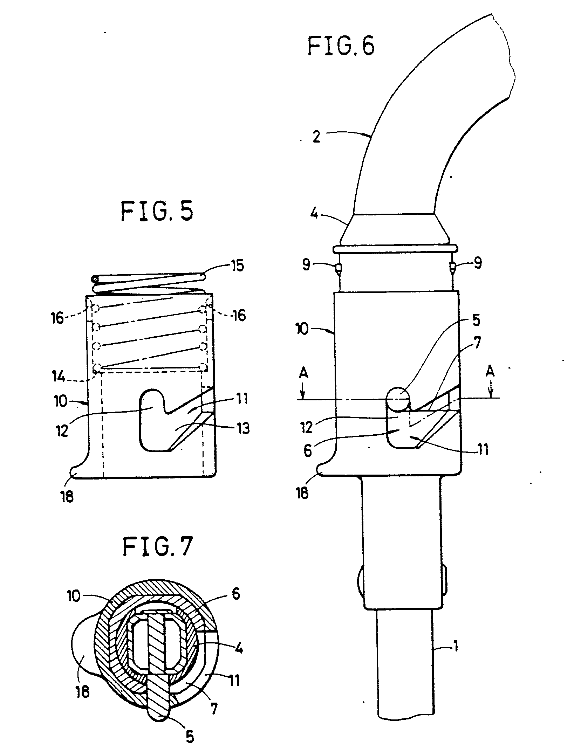

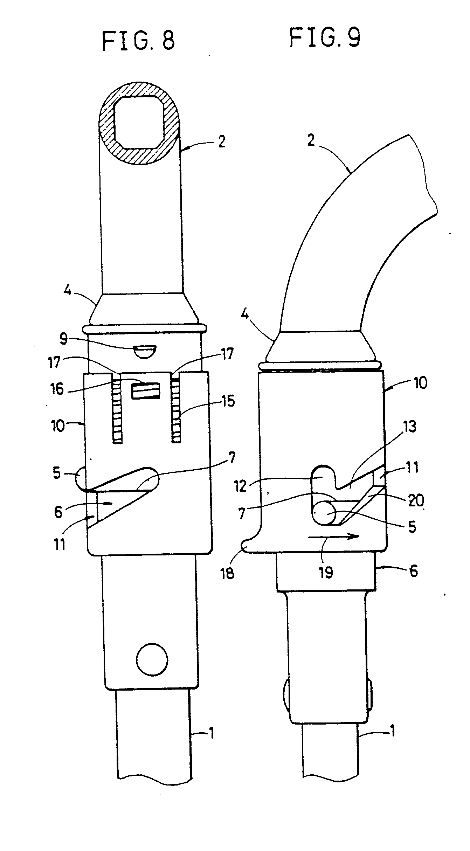

Figs. 3 through 5 are exploded views of the components of the connecting section C, of which Fig. 3 shows one end portion 4 of the push rod-connecting rod 2, Fig. 4 shows the upper end of the push rod 1, and Fig. 5 shows a locking sleeve. Fig. 6 shows the assembled state of the components shown in Figs. 3 through 5, corresponding to the opened and locked state of the baby carriage, the view taken from the back of the baby carriage. Fig. 7 is a sectional view taken along the line A-A of Fig. 6. Fig. 8 shows the parts shown in Fig. 6, and, like Fig. 6, illustrates the opened and locked state of the baby carriage, the view taken from inside the baby carriage.

The end portion 4 of the push rod-connecting rod 2 shown in Fig. 3 includes a vertically extending portion provided with a guide pin 5 projecting therefrom. The vertically extending portion of the end portion 4, as best shown in Fig. 7, has a circular contour in its outer peripheral surface.

Fig. 4 shows the upper end portion of the push rod 1. The upper end of the push rod 1 is formed with a cylinder 6. The cylinder 6 is opened at the top to receive the end portion 4 of the push rod-connecting rod 2. The lateral wall of the cylinder 6 is formed with a throughgoing elongated hole 7 circumferentially extending over an angular range of about 90 degrees. The inner peripheral surface of the cylinder 6 has a shape similar to that of the outer peripheral surface of the end portion 4 of the push rod-connecting rod 2, and as best shown in Fig. 7, when the end portion 4 is inserted in the cylinder 6, the guide pin 5 extends through the throughgoing elongated hole 7 and projects outward. The inner peripheral surface of the cylinder 6 also has a circular contour, and the end portion 4, received in the cylinder 6, is capable of turning around the axis of the cylinder 6. In this embodiment, however, its turning movement is limited to an angular range of about 90 degrees by the guide pin 5 cooperating with the throughgoing elongated hole 7. The outer peripheral surface is formed with a step 8 having a downward surface. Disposed above the step 8 are projections 9, two in number, for example. The contour of the outer peripheral surface of the cylinder 6 is not circular, as shown in Fig. 7.

The locking sleeve 10 shown in Fig. 5 is to be disposed to surround the cylinder 6. The contour of the inner peripheral surface of the locking sleeve 10 is similar to the contour of the outer peripheral surface of the cylinder 6 and hence it is not circular. As a result, the locking sleeve 10 is movable relative to the cylinder 6 only in the direction of the axis. The locking sleeve 10 is formed with a curved elongated hole passage 11 which comprises a vertically extending locking portion 12 and a guide portion 13 obliquely upwardly extending from the lower end of said locking portion 12. The elongated hole passage 11 receives the aforesaid guide pin 5. The inner peripheral surface of the locking sleeve 10 is formed with a step 14 having an upward surface.

A spring 15 is placed on said step 14, with the upper end of the spring 15, when in the assembled state, abutting against the step 8 of the cylinder 6. The lateral wall of the locking sleeve 10 is formed with recesses 16 cooperating with the aforesaid projections 9 to form an anchoring mechanism. In this embodiment, each recess 16 is provided by a hole extending through the lateral wall of the locking sleeve 10. It is preferable to form slits 17 on both sides of each recess 16, as shown in Fig. 8. That is, if the locking sleeve 10 is made, e.g., of synthetic resin, it becomes easy for the portion positioned between the slits 17 to deform elastically. This facilitates engagement between the projection 9 and the recess 16, as will be later described. Extending laterally from the locking sleeve 10 is an operating knob 18 to be used when upwardly moving the locking sleeve.

As shown in Figs. 6 through 8, when the end portion 4 of the push rod-connecting rod 2, the cylinder 6, and the locking sleeve 10 are assembled, the spring 15 is disposed between the step 8 of the cylinder 6 and the step 14 of the locking sleeve 10 and downwardly urges the locking sleeve 10 to the cylinder 6 at all times.

The operation of the aforesaid connecting section will now be described.

First, in the opened state of the baby carriage as shown in Fig. 1, the parts are in the state shown in Figs. 6 through 8. That is, the guide pin 5 is positioned at the upper end of the locking portion 12 of the elongated hole passage 11. In this state, the locking sleeve 10 is at a relatively lower position, where the locking sleeve 10 is held in its position by the action of the spring 15. In this state, the relative rotation between the guide pin 5 and the locking sleeve 10 is inhibited. Since the guide pin 5 is fixed to the end portion 4 of the push rod-connecting rod 2, it follows that the relative rotation between the end portion 4 of the push rod-connecting rod 2 and the locking sleeve 10 is inhibited. Since the locking sleeve 10 and cylinder 6 are capable of moving only axially, there should be no rotative movement between the locking sleeve 10 and cylinder 6, so that there is no relative rotation between the locking sleeve 10 and the push rod-connecting rod 1. As is clear from such series of mechanisms, the end portion 4 of the push rod-connecting rod 2 and the push rod 1 cannot relatively rotate and hence the opened state of the baby carriage is locked.

When it is desired to unlock the opened state and establish the closed state of the baby carriage, the following operations are performed. First, the locking sleeve 10 is upwardly moved using the operating knob 18. This upward movement is effected against the force of the spring 15. When the locking sleeve 10 reaches the end of the upward movement, said projection 9 fits in the recess 16. This state is shown in Fig. 9. That is, in Fig. 9, the anchoring mechanism comprising the projection 9 and recess 16 maintains this state in spite of the action of the spring 15.

In the state of Fig. 9, the guide pin 5 is positioned at the lower end of the locking portion 12 of the elongated hole passage 11 and hence the way for the guide pin 5 leads to the guide portion 13, allowing the guide pin 5 to move relative to the locking sleeve 10 in the direction of arrow 19. The movement of the guide pin 5 in the direction of arrow 19 takes place when the push rod-connecting rod 2 is folded or, in other words, when the baby carriage is closed.

When the baby carriage is to be closed, the end portion 4 of the push rod-connecting rod 2 is rotated relative to the push rod 1 in the direction corresponding to the direction of arrow 19. In response to this rotation, the guide pin 5 is moved in the direction of arrow 19 and passes through the guide portion 13 of the elongated hole passage 11. Since the guide portion 13 extends obliquely upward, the guide pin 5 forcibly downwardly moves the locking sleeve 10 while contacting the lower side 20 of the guide portion 13. As a result, the anchoring imposed by the anchoring mechanism comprising the projections 9 and recesses 16 is cancelled, whereupon the locking sleeve 10 tends to move downward under the action of the spring 15.

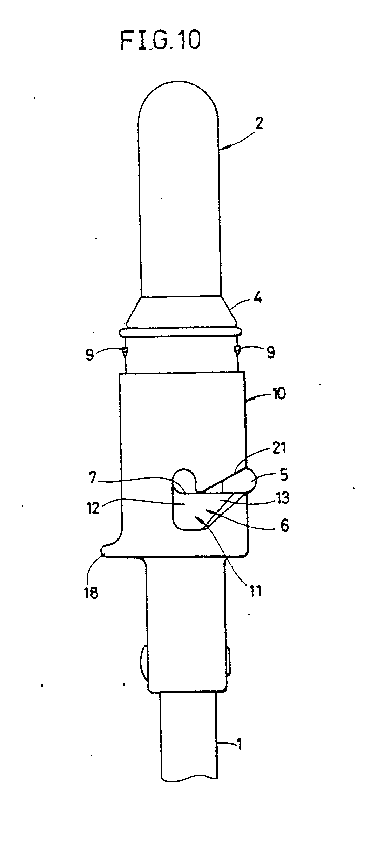

When the baby carriage is closed as shown in Fig. 2, the guide pin 5 reaches the terminal end of the guide portion 13 of the elongated hole passage 11. This state is shown in Fig. 10.

When it is desired to change the closed state of the baby carriage to its opened state, the end portion 4 of the push rod-connecting rod 2 is rotated relative to the push rod 1. In the course of this rotation, the guide pin 5 moves in the elongated hole passage 11 while contacting the upper side 21 (Fig. 10) of the guide portion 13. In this case, the locking sleeve 10 is upwardly moved against the force of the spring 15 but not to the extent that the projections 9 engage the recesses 16. When the guide pin 5 approaches the locking portion 12, the locking sleeve 10 is downwardly moved by the spring 15. In response thereto, the guide pin 5 is positioned again at the upper end of the locking portion 12. Thus, the opened state of the baby carriage is obtained again and locking is automatically applied again to this state.

In the embodiment described above, the elongated throughgoing hole 7 extends over an angular range of about 90 degrees, while the range of rotation of the end portion 4 of the push rod-connecting rod 2 relative to the cylinder 6 is limited to about 90 degrees. However, this arrangement is not absolutely necessary, and the same function can be achieved by using only the elongated hole passage 11.

The foregoing description of the embodiment refers to only on push rod 1 and one end portion 4 of the push rod-connecting rod 2, but it goes without saying that the right-hand and left-hand side arrangements are symmetrical and that the same operation proceeds also on the other side.

Further, the application of the structure for the connecting sections according to this invention is not limited to the baby carriage whose overall construction is shown in Figs. 1 and 2, but is also applicable to other baby carriages provided they have two push rods and a foldable push rod-connecting rod which is interposed between said push rods to connect them.

## Claims

1. A baby carriage having first and second push rods (1), and a handle (2) extending between the push rods (1), the handle (2) having first and second ends (4) rotatably connected to the upper ends (6) of the first and second push rods (1) respectively by the insertion of one such part (4) into the other such part (6) and the engagement of a pin (5) on one such part (4) in an elongate slot (7) in the other such part (6), first and second resiliently loaded locking means (10) engagable with the pins (5) being provided for respectively locking the first handle end (4) against rotation relative to the first push rod upper end (6) and the second handle end (4) against rotation relative to the second push rod upper end (6) in a position of use, the said resilient loading tending to maintain the locking means (10) in locking engagement with the pins (5) when they are in such engagement and the handle ends (4) and push rod upper ends (6) are in their position of use, characterised in that each locking means comprises a locking sleeve (10) mounted on the connection of the handle and push rod ends (4, 6), said sleeve being non-rotatable relative to said push rod end (6) but being movable axially relative thereto with the resilient loading biasing the sleeve for movement in one axial direction, said sleeve having a passage (11) receiving the pin (5) and comprising a first elongate guide portion (13) extending obliquely in said one axial direction to a locking portion (12) which extends oppositely to said one axial direction such that as the handle ends (4) and push rod ends (6) are rotated relative to one another into said position of use, each pin (5) passes along the guide portion (13) of a respective sleeve (10) to the locking portion (12) thereof whereupon the resilient loading biases the sleeve in said one axial direction to locate the pin (5) in the locking portion (12) of the passage (11).

2. A baby carriage as claimed in claim 1, further comprising respective anchoring means (9, 16) for temporarily anchoring each locking sleeve against movement in said one axial direction on movement of said sleeve in the opposite axial direction against the bias of said resilient loading to bring the pin (5) to the end of the locking portion (12) of the passage (11) to which the guide portion (13) thereof extends.

3. A baby carriage as claimed in claim 2, wherein said anchoring means for each locking sleeve comprises a projection (9) and a recess (16) for receiving said projection, one each of said projection and recess being provided respectively on said locking sleeve and push rod end (6).

4. A baby carriage as claimed in claim 2 or 3, wherein each locking sleeve (10) is formed with a pair of slits (17) extending in said axial direction and said anchoring means therefor is positioned in a region between said slits (17).

5. A baby carriage as claimed in any one of the preceding claims, wherein the contours of the outer peripheral surface of each push rod end (6) and of the inner peripheral surface of each locking sleeve (10) are similar to each other and noncircular.

6. A baby carriage as claimed in any one of the preceding claims, wherein the first and second ends (4) of the handle are inserted in the upper ends (6) of the first and second push rods (1).

7. A baby carriage as claimed in any one of the preceding claims, wherein the pins (5) are provided on the handle ends (4) and extend outwardly thereof through said elongated slots (7) provided in the push rod upper ends (6).

8. A baby carriage as claimed in any one of the preceding claims, wherein the resilient loading for the locking sleeves (10) is provided by respective springs (15) interposed between the locking sleeves and push rod ends (6).

9. A baby carriage as claimed in claim 8, wherein said springs (15) bias the locking sleeves (10) downwardly relative to the handle ends (4).

## Patentansprüche

1. Kinderwagen mit einer ersten und einer zweiten Schubstange (1) und einem zwischen den Schubstangen (1) verlaufenden Griff (2), der ein erstes und ein zweites Ende (4) aufweist, die drehbar mit dem oberen Ende (6) jeweils der ersten bzw. der zweiten Schubstange (1) dadurch verbunden sind, daß jeweils ein solches Teil (4) in das jeweils andere Teil (6) eingesetzt wird und daß ein Zapfen (5) an einem solchen Teil (4) in die Längsnut (7) in dem anderen Teil (6) eingreift, einer ersten und einer zweiten federnd vorgespannten Verriegelungseinrichtung (10), die mit den Zapfen (5) in Eingriff kommt, die vorgesehen sind, um jeweils das erste Griffende (4) gegen Drehung gegenüber dem oberen Ende (6) der ersten Schubstange und las zweite Griffende (4) gegen Drehung gegenüber dem oberen Ende (6) der zweiten Schubstange in der Gebrauchsstellung zu sichern, wobei die federnde Vorspanneinrichtung so angelegt ist, daß sie die Verriegelungseinrichtung (10) in einer Verschlußstellung mit den Zapfen (5) hält, wenn diese in der Raststellung und die Griffenden (4) und die oberen Enden (6) der Schubstangen in der Gebrauchsstellung sind, dadurch gekennzeichnet, daß jede der Verriegelungseinrichtungen eine Sicherungsmanschette (10) umfaßt, die an der Verbindung zwischen den Griff- und Schubstangenenden (4, 6) befestigt ist, wobei die Manschette unverdrehbar mit dem Ende der Schubstange (6) verbunden, aber axial zu ihr beweglich ist, wobei die federnde Vorspanneinrichtung die Manschette für eine Bewegung in einer axialen Richtung vorspannt und die Manschette eine Eintrittsöffnung (11) zur Aufnahme des Zapfens (5) aufweist und einen ersten länglichen Führungsabschnitt (13) umfaßt, der schräg in der einen axialen Richtung zu einem Verschlußabschnitt (12) verläuft, der entgegengesetzt zu der einen axialen Richtung verläuft, so daß bei einer Drehung der Griffenden (4) und der Schubstangenenden (6) zueinander in die Gebrauchsstellung jeder Zapfen (5) durch den Führungsabschnitt (13) der entsprechenden Manschette (10) in ihren Verschlußabschnitt (12) hindurchtritt, worauf die federnde Vorspanneinrichtung die Manschette in der einen axialen Richtung vorspannt, um den Zapfen (5) in dem Verschlußabschnitt (12) der Eintrittsöffnung (11) in seine Endlage zu bringen.

2. Kinderwagen nach Anspruch 1, ferner dadurch gekennzeichnet, daß er entsprechende Verankerungseinrichtungen (9, 16) zur zeitweisen Verankerung jeder Sicherungsmanschette gegen Bewegung in der einen axialen Richtung bei Bewegung der Manschette in der entgegengesetzten axialen Richtung gegen die Vorspannung der federnden Vorspanneinrichtung umfaßt, um den Zapfen (5) an das Ende des Verschlußabschnittes (12) der Eintrittsöffnung (11) zu bringen, zu dem ihr Führungsabschnitt (13) verläuft.

3. Kinderwagen nach Anspruch 2, wobei die Verankerungseinrichtung für jede Sicherungsmanschette einen Vorsprung (9) und eine Aussparung (16) zur Aufnahme des Vorsprunges umfaßt, wobei jeweils ein Vorsprung und eine Aussparung jeweils an der Sicherungsmanschette bzw. an dem Schubstangenende (6) angeordnet sind.

4. Kinderwagen nach Anspruch 2 oder 3, wobei jede Sicherungsmanschette (10) mit einem paar Schlitzen (17) ausgebildet ist, die in axialer Richtung verlaufen und die Verankerungseinrichtung daher in einem Bereich zwischen diesen Schlitzen (17) angeordnet ist.

5. Kinderwagen nach einem der vorhergehenden Ansprüche, wobei die Konturen der äußeren peripheren Oberfläche jedes Schubstangenendes (6) und der inneren peripheren Oberfläche jeder Sicherungsmanschette (10) einander ähnlich und unrund sind.

6. Kinderwagen nach einem der vorhergehenden Ansprüche, wobei das erste und das zweite Ende (4) des Griffes in die oberen Enden (6) der ersten bzw. der zweiten Schubstange (1) eingeschoben sind.

7. Kinderwagen nach einem der vorhergehenden Ansprüche, wobei die Zapfen (5) an den Griffenden (4) angeordnet sind und sich von dort aus durch die Längsnuten (7) nach außen erstrecken, wobei die Längsnuten in den oberen Enden (6) der Schubstangen angeordnet sind.

8. Kinderwagen nach einem der vorhergehenden Ansprüche, wobei die federnde Vorspanneinrichtung für die Sicherungsmanschetten (10) durch entsprechende Federn (15) gebildet ist, die zwischen den Sicherungsmanschetten und den Schubstangenenden (6) angeordnet sind.

9. Kinderwagen nach Anspruch 8, wobei die Federn (15) die Sicherungsmanschetten (10) in Bezug auf die Griffenden (4) nach unten vorspannen.

**Revendications**

1. Poussette d'enfant, présentant des première et seconde tiges de poussée (1) et un manche (2) s'étendant entre ces tiges de poussée (1), le manche (2) comprenant des première et seconde extrémités (4) reliées de manière rotative aux extrémités supérieures respectives (6) des première et seconde tiges de poussée (1), par l'insertion de l'une (4) de ces parties dans l'autre partie (6) et par la venue en prise d'un téton (5), situé sur l'une (4) desdites parties, dans une fente oblongue (7) pratiquée dans l'autre partie (6), des premier et second moyens de verrouillage (10), chargés élastiquement et pouvant être mis en prise avec les tétons (5), étant prévus pour verrouiller respectivement la première extrémité (4) du manche en interdisant sa rotation par rapport à l'extrémité supérieure (6) de la première tige de poussée, et la seconde extrémité (4) du manche en interdisant sa rotation par rapport à l'extrémité supérieure (6) de la seconde tige de poussée dans une position d'utilisation, la charge élastique précitée ayant tendance à maintenir les moyens de verrouillage (10) en prise de verrouillage avec les tétons (5) lorsqu'ils sont ainsi en prise, et lorsque les extrémités (4) du manche et les extrémités supérieures (6) des tiges de poussée occupent leur position d'utilisation, caractérisée par le fait que chaque moyen de verrouillage consiste en un manchon de verrouillage (10) monté sur la liaison des extrémités (4, 6) du manche et des tiges de poussée, ledit manchon ne pouvant pas tourner par rapport à ladite extrémité (6) de la tige de poussée, mais étant mobile axialement par rapport à celle-ci, la charge élastique sollicitant le manchon en vue d'un mouvement dans l'une des directions axiales, ledit manchon présentant un passage (11) qui reçoit le téton (5) et qui comprend une première zone allongée de guidage (13) s'étendant à l'oblique, dans ladite direction axiale, jusqu'à une zone de verrouillage (12) qui s'étend à l'opposé de cette direction axiale précitée, de telle sorte que, lorsque les extrémités (4) du manche et les extrémités (6) des tiges de poussée sont amenées par rotation relative à ladite position d'utilisation, chaque téton (5) longe la zone de guidage (13) d'un manchon respectif (10) jusqu'à la zone de verrouillage (12) de ce dernier, après quoi la charge élastique sollicite le manchon dans ladite direction axiale, pour placer le téton (5) dans la zone de verrouillage (12) du passage (11).

2. Poussette d'enfant selon la revendication 1, comprenant par ailleurs un moyen d'arrêt respectif (9, 16), pour arrêter provisoirement chaque manchon de verrouillage en interdisant son mouvement dans la direction axiale précitée lors du mouvement dudit manchon dans la direction axiale opposée, à l'encontre de la sollicitation de ladite charge élastique, pour amener le téton (5) à l'extrémité de la zone de verrouillage (12) du passage (11) vers laquelle la zone de guidage (13) de ce dernier s'étend.

3. Poussette d'enfant selon la revendication 2, dans laquelle ledit moyen d'arrêt, associé à chaque manchon de verrouillage, se compose d'un ergot (9) et d'un évidement (16) destiné à recevoir cet ergot, chacun desdits ergot et évidement étant respectivement prévu sur ledit manchon de verrouillage et sur l'extrémité (6) de la tige de poussée.

4. Poussette d'enfant selon la revendication 2 ou 3, dans laquelle chaque manchon de verrouillage (10) possède une paire de fentes (17) s'étendant dans la direction axiale précitée, et ledit moyen d'arrêt associé à ce manchon est implanté dans une région située entre lesdites fentes (17).

5. Poussette d'enfant selon l'une quelconque des revendications précédentes, dans laquelle les configurations de la surface périphérique externe de chaque extrémité (6) d'une tige de poussée, et de la surface périphérique interne de chaque manchon de verrouillage (10), sont similaires l'une à l'autre et non circulaires.

6. Poussette d'enfant selon l'une quelconque des revendications précédentes, dans laquelle les première et seconde extrémités (4) du manche sont insérées dans les extrémités, supérieures (6) des première et seconde tiges de poussée (1).

7. Poussette d'enfant selon l'une quelconque des revendications précédentes, dans laquelle les tétons (5) sont prévus sur les extrémités (4) du manche et s'étendent extérieurement à celles-ci, en traversant lesdites fentes oblongues (7) ménagées dans les extrémités supérieures (6) des tiges de poussée.

8. Poussette d'enfant selon l'une quelconque des revendications précédentes, dans laquelle la charge élastique imposée aux manchons de verrouillage (10) est développée par des ressorts respectifs (15), interposés entre les manchons de verrouillage et les extrémités (6) des tiges de poussée.

9. Poussette d'enfant selon la revendication 8, dans laquelle lesdits ressorts (15) chargent les manchons de verrouillage (10) vers le bas par rapport aux extrémités (4) du manche.

FIG.1

# FIG. 2

FIG. 3

FIG. 4

FIG.6

FIG.5

FIG.7

FIG. 8          FIG. 9

## FIG.10